# EUROPÄISCHE PATENTSCHRIFT

(11) **EP 2 501 454 B1**
(45) Veröffentlichungstag und Bekanntmachung des Hinweises auf die Patenterteilung: **03.03.2021**
(21) Anmeldenummer: 10781621.7
(22) Anmeldetag: 19.11.2010
(51) Int. Cl.: B01D 29/11, B29C 65/08, B29C 65/16

(54) **VERFAHREN ZUR BILDUNG EINER FILTERMATTE**
METHOD FOR FORMING A FILTER MAT
PROCÉDÉ POUR FORMER UN MAT FILTRANT

(30) Priorität: 20.11.2009 DE 102009054077
(43) Veröffentlichungstag der Anmeldung: 26.09.2012
(73) Patentinhaber: Hydac Filtertechnik GmbH, 66280 Sulzbach/Saar (DE)
(72) Erfinder: MEES, Harald, 66822 Lebach (DE)
(74) Vertreter: Bartels und Partner, Patentanwälte
(86) Internationale Anmeldenummer: PCT/EP2010/007040
(87) Internationale Veröffentlichungsnummer: WO 2011/060949

(56) Entgegenhaltungen:
- EP-A2- 0 139 822
- EP-A2- 0 498 364
- EP-A2- 1 249 182
- WO-A1-96/25219
- WO-A1-03/009922
- CA-A1- 2 553 464
- JP-A- 8 230 833
- US-A- 5 418 035
- US-A- 5 632 831
- US-A1- 2007 028 767
- US-A1- 2007 051 461
- US-B1- 6 451 205

## Beschreibung

Die Erfindung betrifft ein Verfahren zur Bildung einer zur Filtration von Fluiden in Form von Hydrauliköl oder von Lösungen jedweder Art, insbesondere in Form von echten Suspensionen, Dispersionen, Emulsionen oder kolloiden Lösungen, geeigneten, Fasermaterial aufweisenden Filtermatte aus mindestens einem Bahnabschnitt einer Mattenbahn, wobei mindestens eine die Lagen mindestens eines Bahnabschnitts der Mattenbahn miteinander versiegelende Schweißbahn gebildet wird, wobei anschließend mindestens ein Schnitt entlang der mindestens einen Schweißbahn derart durchgeführt wird, dass der mindestens eine Bahnabschnitt unter Bildung mindestens eines versiegelten Randbereichs durchschnitten wird.

Derartige Filtermatten und mit diesen bestückte Filterelemente dienen zur Filtration von Flüssigkeiten, beispielsweise in Form von Hydrauliköl oder von Lösungen jedweder Art, beispielsweise in Form von echten Suspensionen, Dispersionen, Emulsionen oder kolloiden Lösungen, und haben sich wegen ihrer kompakten Bauweise und ihrer großen Filterfläche allgemein bewährt. Die bekannten Filterelemente, wie sie auf dem Markt frei erhältlich sind, weisen eine aus mehreren Lagen verschiedener Filtermaterialien zusammengesetzte, zick-zack-förmig gefaltete oder plissierte Filtermatte auf, die um ein massives, im Inneren des Filterelementes angeordnetes, mit Durchlässen versehenes Stützrohr herumgelegt ist. Der mehrlagige Aufbau einer solchen Filtermatte kann beispielsweise von der einen Seite zur anderen Seite hin folgenden Schichtaufbau aufweisen:
1. Metalldrahtgewebe oder Kunststoffgewebe oder Kunststoffgitter mit Netzstruktur,
2. Polyestervlies,
3. Glasfasermatte oder Melt-Blown-Vlies,
4. Glasfasermatte oder Melt-Blown-Vlies, Papiervlies oder Polyestervlies,
5. Edelstahl-Polyester-Mischgewebe,
6. Metalldrahtgewebe oder Kunststoffgewebe oder Kunststoffgitter mit Netzstruktur.

Im Zuge rationeller Fertigung wird eine derart mehrschichtig zusammengesetzte Mattenbahn in Bahnlängsrichtung durch eine Schneideinheit hindurchgeführt, in der die Bahn randseitig nach Maß zugeschnitten wird, bevor sie zu einer Faltmaschine weiterbewegt wird, in der die Zick-Zack-Form oder das Plissee gebildet wird. Im weiteren Verlauf der Fertigung wird sodann die zugeschnittene Bahn in Bahnabschnitte aufgetrennt, aus denen dann die Filtermatte in Form eines Rohrkörpers geformt wird.

Um einen sicheren Betrieb der in vielen Fällen hochwertigen Anlagen zu gewährleisten, bei denen derartige Filterelemente zum Einsatz kommen, ist es von ausschlaggebender Bedeutung, dass die als Endprodukt der vorstehend genannten Verfahrensschritte hergestellte, rohrförmige Filtermatte ein absolut sauberes Bauteil ist. Genauer gesagt muss sichergestellt sein, dass das Endprodukt völlig frei von Verunreinigungen wie Schmutzteilchen, Faserteilchen und dergleichen ist. In Anbetracht des Aufbaues der mehrlagigen Mattenbahn aus Glasfasermaterial, Vliesen, Gewebe- oder Gitterstrukturen lassen sich diese Anforderungen beim Herstellungsprozess nicht ohne weiteres erfüllen. So kommt es durch die Handhabung und Zwischenlagerungen zwischen den Arbeitsgängen an der Mattenbahn zu einer Fasermigration und einem Faseraustrag, insbesondere auch bei den Fertigungsschritten des Längsschneidens, Faltens und Querschneidens der Mattenbahn an deren Rändern. Dies gefährdet nicht nur die Bauteilsauberkeit, sondern erschwert auch die Handhabung der Mattenbahn und damit die Automatisierung der Fertigung. Eine Automation wird auch dadurch erschwert, dass Stützlagen in der Mattenbahn zum Fädeln neigen.

Durch die DE 42 02 769 A1 ist ein Filter bekannt, insbesondere für eine Verwendung bei Gasfiltern vorbestimmt, die aus einem zick-zack-förmig gefalteten, schmelzbaren Bahnenmaterial mit an den Stirnseiten verschlossenen Falten ausgebildet sind, wobei der Gasfilter an den Rändern zur Abtrennung eines stromab liegenden Reinraumes dicht in ein Gehäuse einsetzbar ist, und wobei die Randabdichtung an den Faltenstirnkanten zusammen mit der Ausbildung eines geschlossenen Rahmenteils möglichst einfach und kostengünstig herstellbar sein soll. Zur Realisierung dieses Ziels werden bei der bekannten Lösung die Stirnkanten der Falten zu einer vergrößerten Auflagefläche aufgeschmolzen und gestaucht, wobei ein gemeinsames, geschlossenes Rahmenteil als Verbund der einzelnen Auflageflächen gebildet wird. Auf diesem gemeinsamen Verbund der Stirnkantenflächen können in einfacher Weise Dichtstreifen aufgeklebt oder geschweißt werden. Mithin ist durch die Lösung nach der DE 42 02 769 A1 eine längsseitige Verschweißung von Bahnmaterial bekannt.

Des Weiteren offenbart die EP 0 522 692 A2 gemäß einem Verfahren zur Bildung einer zur Filtration von Fluiden geeigneten Filtermatte diese mit einer mehrlagigen Bahn aufzubauen, die an ihren Endseiten verschweißt wird. Was die Herstellung eines Filter-Endproduktes hoher Bauteilsauberkeit anbelangt, lassen die bekannten Lösungen noch Wünsche offen.

Durch die US 6 451 205 B1 wird gelehrt, mehrere Lagen eines Filtermaterials in einer Vorrichtung anzuordnen, die die Lagen randseitig verschweißt und überstehende Abschnitte abtrennt.

Die EP 0 498 364 A2 zeigt eine Ultraschallschweißvorrichtung auf. Mit dieser Vorrichtung ist es möglich, natürliche oder synthetische Stofflagen miteinander zu verschweißen und zu beschneiden.

Die US 5 632 831 A offenbart ebenfalls eine Vorrichtung mit einer Einrichtung zum kombinierten Verschweißen und Beschneiden von synthetischen Stofflagen.

Ein Verfahren der eingangs genannten Art zur Bildung einer zur Filtration von Fluiden geeigneten Filtermatte als mehrlagiges Produkt ist aus EP 1 249 182 A2 bekannt. Hierbei werden mindestens zwei Stofflagen, von welchen mindestens eine Stofflage einen thermoplastischen Materialanteil aufweist, fortlaufend einer Ultraschall-Arbeitsstation zugeführt, an welcher ein Ambosselement rotierend gegenüber einer Ultraschall-Sonotrode angetrieben wird, und die Stofflagen in einem Arbeitsschritt gleichzeitig durch Ultraschall-Schweißen miteinander verbunden werden und die Schweißstelle zu einer Solltrennstelle geschwächt wird. Nach der Ultraschall-Arbeitsstation sind die Stofflagen miteinander verbunden, aber noch fortlaufend in einer Bahn angeordnet. Die Bahn wird anschließend einer Trennstation zugeführt und dort werden die einzelnen Bahnabschnitte voneinander getrennt, vorzugsweise durch Aufbringen einer Zugbeanspruchung, aber wahlweise auch durch zusätzliches Schneiden.

Im Hinblick auf diese Problematik liegt der Erfindung die Aufgabe zugrunde, ein Verfahren aufzuzeigen, das einfach durchführbar ist und die Herstellung eines Endproduktes hoher Bauteilsauberkeit gewährleistet.

Erfindungsgemäß ist diese Aufgabe durch ein Verfahren gelöst, das die Merkmale des Patentanspruches 1 in seiner Gesamtheit aufweist. Vorteilhafte Ausgestaltungen der Erfindung sind Gegenstand der Unteransprüche.

Bei der erfindungsgemäßen Lösung bilden außenliegende oder randseitige Schweißeinheiten eine entlang der Längsränder der Mattenbahn verlaufende Schweißbahn, wird die Mattenbahn mit den so gebildeten Schweißbahnen zu einem Längsschneider vorgeschoben, der in den Schweißbahnen jeweils einen Schnitt ausführt, der die Mattenbahn in Teilbahnen mit versiegelten Längsrändern aufteilt, gelangen die Teilbahnen zu einer Faltmaschine und werden dort plissiert, und wird in einem Schweiß- und Schnittvorgang eine Querschweißbahn in gleicher Weise wie die Schweißbahnen gebildet und ein zur Vorschubrichtung senkrecht verlaufender Auftrennschnitt durchgeführt, der innerhalb der Querschweißbahn mittig gebildet wird und die Teilbahnen in abgeteilte Bahnabschnitte auftrennt, die nicht nur an den Längsrändern, sondern auch an den Querrändern versiegelte Schweißschenkel aufweisen.

Der Teil der Schweißbahn, der nach dem Schnitt an dem bzw. den Seitenrändern der Mattenbahn verbleibt, bildet somit eine Randversiegelung, durch die die Enden sämtlicher Lagen durch den das Kunststoffmaterial der Lagen aufschmelzenden Schweißvorgang versiegelt sind. Eine Auffädelung oder eine Fasermigration an den Rändern ist dadurch verhindert. Dadurch wird nicht nur die erforderliche Bauteilsauberkeit erreicht, weil das Endprodukt von Glasfaserteilchen frei ist, sondern es werden Fertigungsprobleme, wie eine Vereinzelung von Lagen bei der Handhabung und Weiterbearbeitung mit Sicherheit vermieden.

Dadurch sind nicht nur die Längsränder gegen Fasermigration oder Auffädeln gesichert, sondern an sämtlichen Außenrändern der Bahnabschnitte befindet sich eine Randversiegelung, so dass ein umfänglicher Schutz gegen jedwede Fasermigration vorhanden ist.

Vorteilhafterweise erzeugt eine in der Mattenbahn mittig gelegene Schweißeinheit eine gleichartige Schweißbahn.

In einer bevorzugten Variante des erfindungsgemäßen Verfahrens verläuft mindestens ein Schnitt innerhalb der jeweiligen Schweißbahn im Abstand von deren beiden Seitenrändern. Hierbei werden beim Durchschneiden der Mattenbahn bzw. des zumindest einen Bahnabschnittes an beiden Seitenrändern versiegelte Randbereiche ausgebildet.

Weiter ist es vorteilhaft, dass mindestens eine Schweißbahn parallel zur Längsrichtung der Mattenbahn verläuft. Zudem ist mindestens eine Schweißbahn entlang eines Seitenrandes mindestens eines Bahnabschnittes ausgebildet. In besonders vorteilhafter Weise kann, wenn von einer Mattenbahn einer entsprechenden Breite ausgegangen wird, innerhalb der Mattenbahn zusätzlich zu den Schnitten entlang der Längsränder mindestens ein die Mattenbahn in Teilbahnen aufteilender weiterer Längsschnitt ausgeführt werden, wobei vor dem Durchführen des weiteren Längsschnittes entlang desselben eine die Lagen der Mattenbahn miteinander versiegelnde weitere Schweißbahn gebildet und der weitere Längsschnitt innerhalb dieser Schweißbahn im Abstand von deren beiden Seitenrändern durchgeführt wird. Somit werden aus einer Mattenbahn gleichzeitig mehrere Teilbahnen mit jeweils versiegelten Längsrändern gebildet, so dass eine besonders rationelle Fertigung bei hoher Produktionsgeschwindigkeit erreichbar ist.

Die Mattenbahn ist quer zur Längsrichtung in mindestens zwei Bahnabschnitte aufgetrennt, wobei vor dem Auftrennen der Mattenbahn oder der Teilbahnen in Bahnabschnitte entlang der Auftrennbereiche eine die Lagen der jeweiligen Mattenbahn oder Teilbahnen miteinander versiegelnde, zu den Längsrändern quer verlaufende zusätzliche Schweißbahn gebildet wird, und wobei das Auftrennen durch einen Auftrennschnitt durchgeführt wird, der innerhalb dieser zusätzlichen Schweißbahn im Abstand von deren beiden Seitenrändern verläuft. Zudem verläuft mindestens eine Schweißbahn quer zur Längsrichtung der Mattenbahn und mindestens eine Schweißbahn wird entlang eines Querrandes mindestens eines Bahnabschnittes ausgebildet.

Bei einer bevorzugten Variante des erfindungsgemäßen Verfahrens wird mindestens ein Bahnabschnitt rechteckförmig ausgebildet und an sämtlichen Längsrändern und Querrändern mit einem versiegelten Randbereich versehen. Weiter ist es vorteilhaft, dass die gefertigten Bahnabschnitte an den Längsrändern und den Querrändern versiegelte Schweißschenkel aufweisen.

Auf vielen Einsatzgebieten müssen Filterelemente benutzt werden, bei denen die Filtermatte aus einer verhältnismäßig hohen Gesamtanzahl von Einzellagen aufgebaut ist, wobei häufig sechs Lagen vorhanden sind. Insbesondere bei sensiblen Filtermedien ergeben sich Schweißprobleme, wenn eine höhere Anzahl von Lagen, beispielsweise zwölf Lagen, in einem Arbeitsgang dichtend miteinander verbunden werden müssen, um durch Verbinden der Endränder eines Bahnabschnittes eine geschlossene Filtermatte zu bilden. Diesbezügliche Schwierigkeiten lassen sich bei der Erfindung dank der an den Bahnabschnitten vorhanden Randversiegelung dadurch beheben, dass zur Bildung einer Filtermatte mit einer vorgegebenen Gesamtanzahl von Lagen vorgefertigte Bahnabschnitte, die eine geringere Anzahl von Lagen als die Gesamtanzahl aufweisen, mit sich deckenden, versiegelten Randbereichen aneinandergelegt und an den versiegelten Randbereichen miteinander verbunden werden. Eine Filtermatte mit zwölf Lagen von Filtermedien kann dadurch beispielsweise aus zwei vorgefertigten, d.h. randseitig versiegelten, Bahnabschnitten mit je sechs Lagen gebildet werden, indem ein Schweißvorgang an den bereits versiegelten Bereichen durchgeführt wird. Dadurch lässt sich eine dichte Verbindung auf sichere Weise mittels eines schonenden Schweißvorganges erreichen, ohne dass eine thermische Beeinträchtigung auch sensibler Filtermedien zu befürchten ist.

Mit besonderem Vorteil können die Verbindungen derart durchgeführt werden, dass ein Schweißvorgang am Außenrand der versiegelten Randbereiche und im Abstand vom Innenrand der versiegelten Randbereiche durchgeführt wird, wodurch sensible Filtermedien besonders wirksam gegen thermische Beeinträchtigungen geschützt sind.

Bei besonders bevorzugten Ausführungsbeispielen werden die Schweißverbindungen unter Verwendung eines Schweißzusatzstoffes, beispielsweise einer zwischen die versiegelten Bereiche eingelegten Folie aus Kunststoffmaterial, gebildet, wobei ein einen Schmelzklebstoff bildender Schweißzusatzstoff, beispielsweise eine PBT-Folie, benutzt werden kann.

Wenn der Schweißvorgang durch Laserschweißen durchgeführt wird, kann ein eine Sperrschicht für Laserlicht bildender Schweißzusatzstoff benutzt werden.

Nachstehend ist die Erfindung anhand der Zeichnung im Einzelnen erläutert. Es zeigen:
- Fig. 1: teilweise in stirnseitiger Ansicht, teilweise im Schnitt dargestellt, den inneren Teil eines Filterelements mit einer nach dem erfindungsgemäßen Verfahren hergestellten Filtermatte;
- Fig. 2: eine stark schematisch vereinfacht gezeichnete Darstellung des Fertigungsablaufes zur Erzeugung plissierter Teilabschnitte für die Herstellung der Filtermatte;
- Fig. 3 und 4: nicht maßstäbliche Schemaskizzen zur Verdeutlichung des Schweißvorganges zur Randversiegelung einer sechslagig aufgebauten Mattenbahn, durchgeführt durch eine Ultraschall-Schweißeinrichtung bzw. eine Laserschweißeinrichtung;
- Fig. 5: eine nicht maßstäbliche schematisierte Darstellung einer Ultraschall-Schweißeinrichtung zur Herstellung einer üblichen Schweißnaht an einer aus zwölf Lagen aufgebauten Filtermatte gemäß dem Stand der Technik;
- Fig. 6: in entsprechender schematisierter Darstellung die Herstellung einer Versiegelungsnaht mittels einer Ultraschall-Schweißeinrichtung zur Durchführung des erfindungsgemäßen Verfahrens;
- Fig. 7: eine entsprechend schematisierte Darstellung einer Ultraschall-Schweißeinrichtung für eine Versiegelungsnaht an einer aus zwei gemäß Fig. 6 hergestellten, sechslagigen Mattenbahnen gemäß dem erfindungsgemäßen Verfahren hergestellten zwölflagigen Mattenbahn;
- Fig. 8: eine skizzenhafte, nicht maßstäbliche Darstellung des Verbindungsbereiches zwischen Filtermatte und Umfangsrand einer Filterelement-Endkappe gemäß dem Stand der Technik; und
- Fig. 9 und 10: der Fig. 8 entsprechende Darstellungen der gleichen Verbindungsbereiche von nach dem erfindungsgemäßen Verfahren herzustellenden Filterelementen.

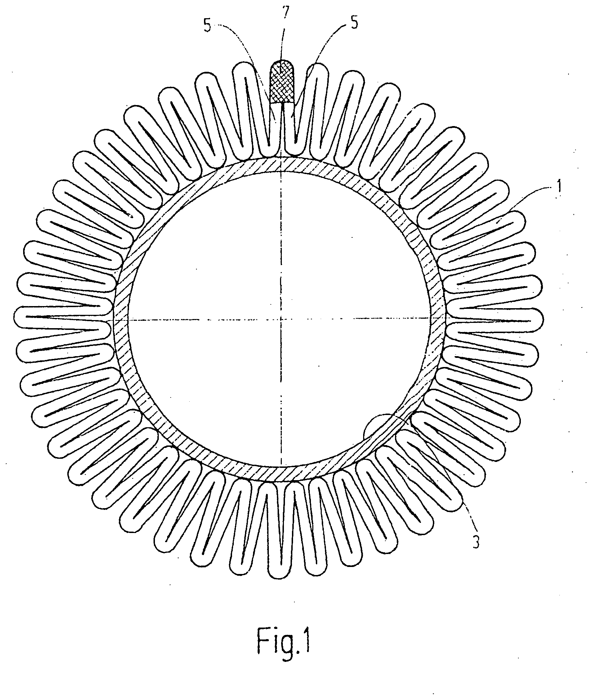

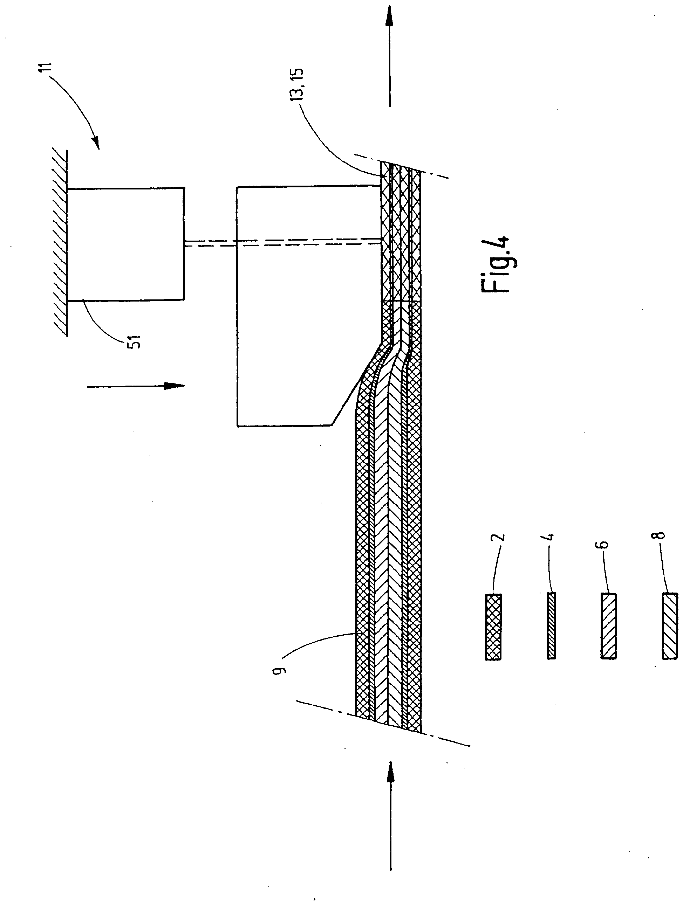

Die Fig. 1 zeigt von dem herzustellenden Filterelement die rohrförmige Filtermatte 1, die zick-zack-förmig oder plissiert gefaltet ist. Zur Abstützung der Filtermatte 1 ist im Inneren des Filterelementes ein metallisches Stützrohr 3 vorgesehen, das mit Fluiddurchlässen versehen ist. Die Filtermatte 1 ist, was in Fig. 1 nicht näher dargestellt, jedoch in Fig.4 mit Bezugszahlen teilweise kenntlich gemacht ist, mehrlagig aufgebaut und kann beispielsweise von außen nach innen folgenden Schichtaufbau aufweisen.
1. Metalldrahtgewebe oder Kunststoffgewebe oder Kunststoffgitter mit Netzstruktur (2 in Fig.4),
2. Polyestervlies (4 in Fig.4),
3. Glasfasermatte oder Melt-Blown-Vlies (6 in Fig.4),
4. Papiervlies oder Polyestervlies (8 in Fig.4),
5. Polyestervlies (4 in Fig.4),
6. Metalldrahtgewebe oder Kunststoffgewebe oder Kunststoffgitter mit Netzstruktur (2 in Fig.4).

Für einen mehrlagigen Aufbau können innerhalb der vorstehend genannten sechs Lagen zusätzliche Stützlagen enthalten sein.

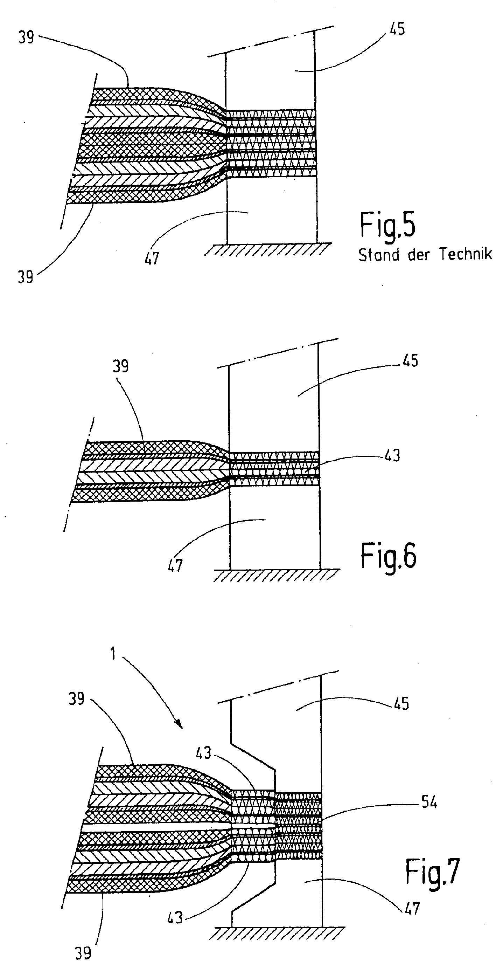

Die beiden einander zugewandten Enden 5 der Filtermatte 1 laufen in einem spitzen Winkel aufeinander zu, wenn die Filtermatte 1 rohrförmig um das Stützrohr 3 herumgelegt ist, und sind durch eine mittels thermischen Schweißvorgangs erzeugte Schweißnaht 7 unlösbar miteinander verbunden. Die Schweißnaht 7 kann mittels Ultraschallschweißen oder Laserschweißen ohne Schweißzusatzstoffe ausgeführt werden, weil der mehrlagige Schichtaufbau der Filtermatte 1 Werkstoffe mit guten thermischen Schweißeigenschaften enthält, beispielsweise Polyamid- oder Polyesterwerkstoffe. Wie unten unter Bezug auf Fig. 6 und 7 sowie 9 und 10 näher erläutert wird, schließt das erfindungsgemäße Verfahren jedoch auch die Bildung von Schweißverbindungen mit Schweißzusatzstoffen ein.

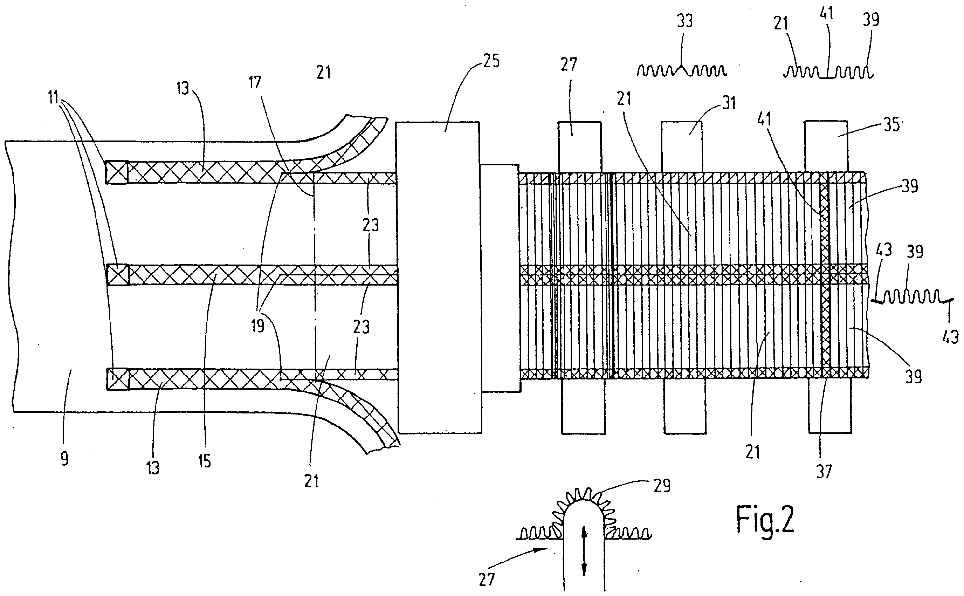

Die Fig. 2 verdeutlicht den Herstellungsprozess von Bahnabschnitten für die rohrförmigen Filtermatten 1. Dabei wird in einer in Fig. 2 von links nach rechts verlaufenden Arbeits- oder Vorschubrichtung eine ungefaltete Mattenbahn 9 zu Laser- oder Ultraschall-Schweißeinheiten 11 vorgeschoben, von denen die außenliegenden oder randseitigen Schweißeinheiten 11 eine entlang der Längsränder der Mattenbahn 9 verlaufende Schweißbahn 13 bilden. Diese wird so gebildet, dass die Lagen der Mattenbahn 9, beim Beispiel sechs Lagen, durch den Schichtaufbau hindurch miteinander versiegelt werden. Die in der Mattenbahn 9 mittig gelegene Schweißeinheit 11 erzeugt eine gleichartige Schweißbahn 15. Mit den so gebildeten Schweißbahnen 13, 15 wird die Mattenbahn 9 zu einem Längsschneider 17 vorgeschoben, der in den Schweißbahnen 13, 15 jeweils einen Schnitt 19 ausführt, der innerhalb der Schweißbahnen 13, 15, bei der Darstellung von Fig. 1 mittig, gelegen ist, so dass nach dem Schnitt die Mattenbahn 9 in Teilbahnen 21 aufgeteilt ist, die jeweils versiegelte Längsränder 23 aufweisen. Diese Teilbahnen 21 gelangen sodann zu einer schematisiert angedeuteten Faltmaschine 25. Die aus dieser austretenden, plissierten Teilbahnen 21 erreichen sodann einen Pufferspeicher 27, der als Ausgleichseinrichtung für unterschiedliche Vorschubgeschwindigkeiten eine veränderliche Bahnschleife 29 bildet. Vom Speicher 27 gelangen die Teilbahnen 21 sodann zu einem Zählwerk und Vorbereiter 31, der nach einer abgeteilten Anzahl von Pliseefalten eine Streckstelle 33 zur Vorbereitung eines folgenden Schweiß- und Schnittvorganges bildet, der in einer integrierten Schweiß- und Schnitteinrichtung 35 durchgeführt wird. Bevor in dieser ein zur Vorschubrichtung senkrecht verlaufender Auftrennschnitt 37 durchgeführt wird, der die Teilbahnen 21 in abgeteilte Bahnabschnitte 39 auftrennt, wird eine Querschweißbahn 41 gebildet, und zwar in gleicher Weise wie die Schweißbahnen 13 und 15, wobei der Auftrennschnitt 37 wiederum innerhalb der Schweißbahn 41 mittig gebildet wird.

Somit verlassen die Fertigungseinrichtung von Fig. 2 Bahnabschnitte 39, die nicht nur an den Längsrändern 23, sondern auch an den Querrändern, versiegelte Schweißschenkel 43 aufweisen. Mit andere Worten gesagt, weisen die Bahnabschnitte 39 keinerlei freie, unversiegelte Ränder auf, so dass die Lagen der gebildeten Filtermatte allseitig derart eingeschlossen sind, dass keine Migration eines Faden- oder Fasermaterials aus dem Mattenaufbau möglich ist. Gleichzeitig dienen die aus der quer verlaufenden Schweißbahn 41 gebildeten Schweißschenkel 43 zur Bildung der Verbindungsnaht 7 an den aneinander gelegten Enden 5 der gebildeten, rohrförmigen Filtermatte 1 (Fig. 1).

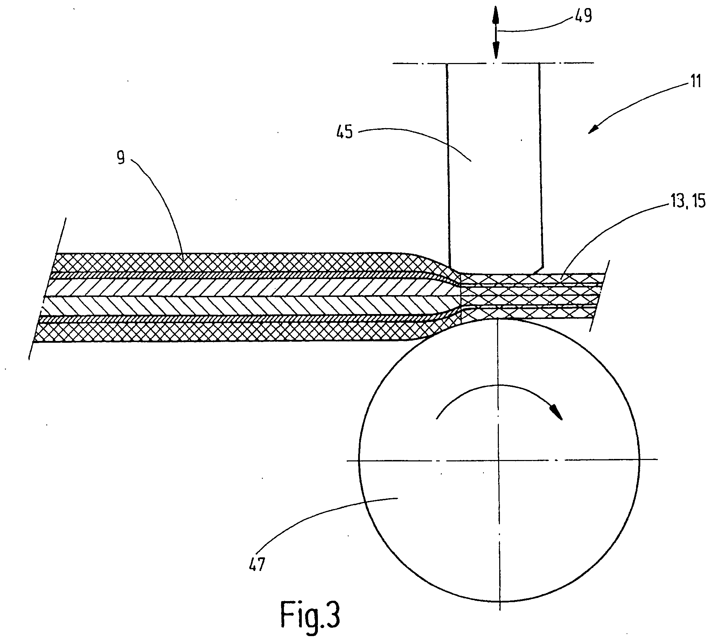

Die Fig. 3 und 4 zeigen in schematisierter, nicht maßstäblicher Darstellung zwei Möglichkeiten der Ausbildung der Schweißeinheiten 11 zur Bildung der in Arbeits- oder Längsrichtung verlaufenden Schweißbahnen 13 und 15. Dabei zeigt Fig. 3 eine Ultraschall-Schweißeinheit mit einer stempelförmigen Sonotrode 45 und einem Amboss 47. Der Amboss 47 ist dabei durch eine achsfest angeordnete Walze gebildet, während die Sonotrode 45 für den Schweißvorgang bewegbar ist, wie mit Doppelpfeil 49 angedeutet ist. Beim dargestellten Beispiel erfolgt der versiegelnde Schweißvorgang an einer sechslagig aufgebauten Mattenbahn 9.

In entsprechender Weise verdeutlicht Fig. 4 den versiegelnden Schweißvorgang mittels einer Schweißeinheit 11 in Form einer Laser-Schweißvorrichtung, wobei ein ortsfester Laser 51 in Verbindung mit einer nicht näher dargestellten Sperrschicht für Laserlicht in üblicher Weise die thermische Energie für den Schweißvorgang liefert. Zur Erreichung einer guten Verbindung kann ein Laser 51 auch beidseitig, also über oder unter der Bahn, angeordnet sein.

Wie bereits erwähnt, sind Filterelemente, die hohen Anforderungen genügen, mit Filtermatten 1 versehen, die aus einer verhältnismäßig großen Anzahl von Lagen aufgebaut sind. Wenn bei einer hohen Anzahl von Lagen die zum Herstellen der Filtermatten 1 erforderlichen Schweißvorgänge durchgeführt werden, wird bei den Verfahren gemäß dem Stand der Technik so vorgegangen, dass, um sichere Verbindungen herzustellen, Schweißvorgänge intensiv durchgeführt werden, was zu erhöhter thermischer Belastung empfindlicher Lagen der Mattenbahnen führen kann, oder dass Schweißvorgänge in spezieller und aufwendiger Weise durchgeführt werden, wie dies beispielsweise durch WO 01/05483 A1 offenbart ist, wobei die einander zugewandten Enden einer plissierten Filtermatte über eine Verbindungsleiste fixiert sind, die die Enden zumindest teilweise übergreift, wobei die Verbindungsleiste, aus einem thermisch verformbaren Kunststoff bestehend, mit den Enden der Filtermatte verschweißt wird. Gleichzeitig wird die Schweißstelle mit einer Einprägung versehen. Die vorliegende Fig. 5 zeigt die Ausbildung einer Schweißnaht an einer zwölflagigen Mattenbahn 53 gemäß dem Stand der Technik mittels eines intensiven Schweißvorganges, der durch Ultraschallschweißen zwischen Sonotrode 45 und Amboss 47 ausgeführt wird. Wie erwähnt, kommt es hierbei zu einer hohen thermischen Belastung empfindlicher Lagen der Bahn 53.

Demgegenüber verdeutlichen Fig. 6 und 7 das erfindungsgemäße Vorgehen, wobei von einem sechslagigen Bahnabschnitt 39 ausgegangen ist, der an seinen Rändern jeweils mit der Versiegelung versehen ist, durch die die versiegelten Schweißschenkel 43 gebildet sind. Nach dem Aneinanderlegen zweier je sechslagigen Bahnabschnitte 39 erfolgt die Schweißverbindung zur Bildung der fertigen, zwölflagigen Filtermatte 1 nunmehr nicht an freien Endrändern, sondern an den bereits versiegelten Schweißschenkeln 43, wobei, wie in Fig. 7 gezeigt, der eine sichere Verbindung erzeugende Schweißvorgang entlang des äußeren Randes 54 erfolgen kann, also, getrennt durch die freien Bereich der Schweißschenkel 43, in einem Sicherheitsabstand von den inneren Lagen der Bahnabschnitte 39, so dass auch bei einem an dem äußeren Rand 54 ausgeführten, intensiven Schweißvorgang die Lagen der Filtermatte 1 unbeeinträchtigt bleiben.

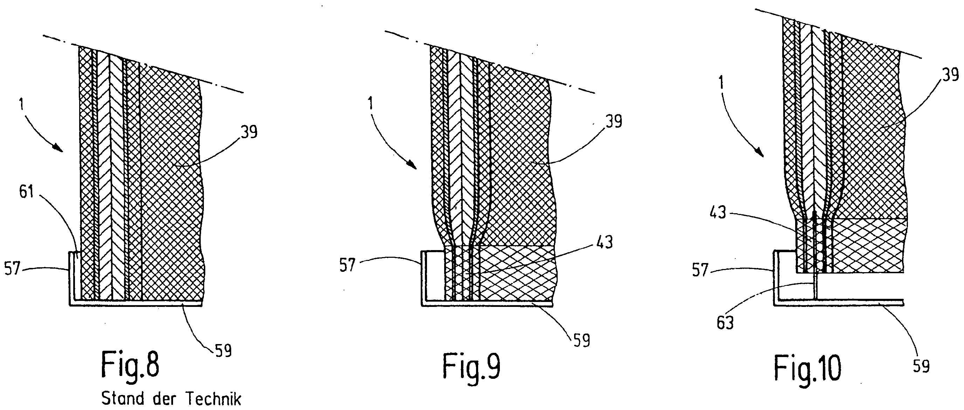

Die nach dem erfindungsgemäßen Verfahren hergestellten Filtermatten 1 ermöglichen auch eine besonders rationelle und sichere Verbindung zwischen den axialen Enden der jeweiligen Filtermatte 1 und einem Einfassungsrand 57 einer aus Kunststoff gebildeten Endkappe 59 des Filterelementes. Beim Stand der Technik wird, wie in Fig. 8 dargestellt ist, der unversiegelte Rand der Filtermatte 1 über ein Klebebett 61 mit der Endkappe 59 und dem Einfassungsrand 57 verklebt. Bei diesem Vorgehen gemäß dem Stand der Technik besteht die Gefahr von Undichtigkeiten. Auch verhindern Toleranzen der Faltenhöhen der Filtermatten 1, dass durch die Endkappen 59 eine immer gleiche Vorspannung der Filtermatten 1 gewährleistet ist.

Dank des Vorhandenseins der versiegelten Schweißschenkel 43 sind bei der Erfindung die vorstehend genannten Probleme vermieden. Wie Fig. 9 verdeutlicht, lassen sich die versiegelten Schweißschenkel 43, ohne dass ein Klebebett erforderlich wäre, unmittelbar mit dem Einfassungsrand 57 verschweißen. Der aus Kunststoff bestehende Einfassungsrand 57 und der versiegelte Schweißschenkel 43 bieten von sich aus die für den thermischen Schweißprozess erforderlichen Stoffe, so dass der Schweißvorgang ohne Schweißzusatzstoffe ausgeführt werden kann und eine dichte und feste Verbindung zustande kommt. Die Fig. 10 verdeutlicht demgegenüber eine Alternative, bei der am versiegelten Schweißschenkel 43 ein Schweißzusatzstoff 63 vorgesehen ist. Dabei kann es sich um eine Folie aus Polybutylenterephtalat handeln. Eine derartige PBT-Folie, wie sie unter der Bezeichnung "Vestodur®" vertrieben wird, kann bei dem thermischen Schweißvorgang eine Art Schmelzklebstoff bilden. Außerdem kann ein derartiger Zusatzstoff als für Laserlicht undurchlässige Lasersperrschicht dienen, wenn der Schweißvorgang mittels Laserschweißen durchgeführt wird.

## Patentansprüche

1. Verfahren zur Bildung einer zur Filtration von Fluiden in Form von Hydrauliköl oder von Lösungen jedweder Art, insbesondere in Form von echten Suspensionen, Dispersionen, Emulsionen oder kolloiden Lösungen, geeigneten, Fasermaterial aufweisenden Filtermatte (1) aus mindestens einem Bahnabschnitt (39) einer Mattenbahn (9), wobei eine ungefaltete Mattenbahn (9) in Arbeits- oder Vorschubrichtung zu Laser- oder Ultraschall-Schweißeinheiten (11) vorgeschoben wird und mindestens eine die Lagen mindestens eines Bahnabschnittes (39) der Mattenbahn (9) miteinander versiegelnde Schweißbahn (13, 15, 41) gebildet wird, wobei anschließend mindestens ein Schnitt (19, 37) entlang der mindestens einen Schweißbahn (13, 15, 41) derart durchgeführt wird, dass der mindestens eine Bahnabschnitt (39) unter Bildung mindestens eines versiegelten Randbereichs (43) durchschnitten wird, **dadurch gekennzeichnet, dass**:
- außenliegende oder randseitige Schweißeinheiten (11) eine entlang der Längsränder der Mattenbahn (9) verlaufende Schweißbahn (13) bilden,
- die Mattenbahn (9) mit den so gebildeten Schweißbahnen (13, 15) zu einem Längsschneider (17) vorgeschoben wird, der in den Schweißbahnen (13, 15) jeweils einen Schnitt (19) ausführt, der die Mattenbahn (9) in Teilbahnen (21) mit versiegelten Längsrändern (23) aufteilt,
- die Teilbahnen (21) zu einer Faltmaschine (25) gelangen und dort plissiert werden, und
- in einem Schweiß- und Schnittvorgang eine Querschweißbahn (41) in gleicher Weise wie die Schweißbahnen (13, 15) gebildet und ein zur Vorschubrichtung senkrecht verlaufender Auftrennschnitt (37) durchgeführt wird, der innerhalb der Querschweißbahn (41) mittig gebildet wird und die Teilbahnen (21) in abgeteilte Bahnabschnitte (39) auftrennt, die nicht nur an den Längsrändern (23), sondern auch an den Querrändern versiegelte Schweißschenkel (43) aufweisen.

2. Verfahren nach Anspruch 1, **dadurch gekennzeichnet, dass** eine in der Mattenbahn (9) mittig gelegene Schweißeinheit (11) eine gleichartige Schweißbahn (15) erzeugt.

3. Verfahren nach Anspruch 1 oder 2, **dadurch gekennzeichnet, dass** die Schweißverbindungen unter Verwendung eines Schweißzusatzstoffes, beispielsweise einer zwischen die versiegelten Randbereiche eingelegten Folie (63) aus Kunststoffmaterial, gebildet werden.

4. Verfahren nach Anspruch 3, **dadurch gekennzeichnet, dass** ein einen Schmelzklebstoff bildender Schweißzusatzstoff, beispielsweise eine PBT-Folie (63), benutzt wird.

5. Verfahren nach einem der vorhergehenden Ansprüche, **dadurch gekennzeichnet, dass** der Schweißvorgang durch Laserschweißen (51) durchgeführt wird, und dass ein eine Sperrschicht für Laserlicht bildender Schweißzusatzstoff (63) benutzt wird.

## Claims

1. Method for forming a filter mat (1) comprising fibre material, suited to filtering fluids in the form of hydraulic fluid or solutions of any kind, in particular in the form of true suspensions, dispersions, emulsions or colloidal solutions from at least one web portion (39) of a mat web (9), an unfolded mat web (9) being advanced in the working or feed direction to laser or ultrasound welding units (11) and at least one weld web (13, 15, 41) sealing the layers of at least one web portion (39) of the mat web (9) to one another is formed, at least one cut (19, 37) then being made along the at least one weld web (13, 15, 41) such that the at least one web portion (39) is cut through, forming at least one sealed edge region (43), **characterised in that**:
- welding units (11) located on the outside or on the edges form a weld web (13) running along the longitudinal edges of the mat web (9),
- the mat web (9) with the weld webs (13, 15) thus formed is advanced to a longitudinal cutter (17), which makes one cut (19) in each of the weld webs (13, 15), which divides the mat web (9) into partial webs (21) with sealed longitudinal edges (23),
- the partial webs (21) pass into a folding machine (25) where they are pleated, and
- a transverse weld web (41) is formed in a welding and cutting process in the same manner as the weld webs (13, 15) and a dividing cut (37) is made running perpendicular to the feed direction, said cut being formed in the middle of the transverse weld web and dividing the partial webs (21) into separated web portions (39), which comprise sealed weld legs (43) which are not only sealed at their longitudinal edges, but also at their transverse edges.

2. Method according to claim 1, **characterised in that** a welding unit (11) located in the middle of the mat web (9) produces a weld web (15) of the same kind.

3. Method according to either claim 1 or claim 2, **characterised in that** the weld joints are formed using a weld filler material, for example a sheet (63) made from plastics material inserted between the sealed edge regions.

4. Method according to claim 3, **characterised in that** a weld filler material forming a hot-melt adhesive, for example a PBT sheet (63), is used.

5. Method according to any one of the preceding claims, **characterised in that** the welding operation is carried out by laser welding (51), and **in that** a weld filler material (63) forming a barrier layer for laser light is used.

## Revendications

1. Procédé de formation d'une nappe (1) de filtre en au moins un tronçon (39) d'une bande (9) de nappe ayant un matériau fibreux approprié à la filtration de fluides, sous la forme d'huile hydraulique ou de solutions d'un type quelconque, notamment sous la forme de suspensions vraies, de dispersions, d'émulsions ou de solutions colloïdales, dans lequel on fait avancer une bande (9) de nappe non pliée dans un sens de travail ou d'avance vers des unités (11) de soudage par laser ou par ultrason et on forme au moins une bande (13, 15, 41) soudée, scellant ensemble les couches d'au moins un tronçon (39) de la bande (9) de nappe, dans lequel ensuite, on effectue une coupe (19, 37) le long de la au moins une bande (13, 15, 41) soudée de manière à ce que le au moins un tronçon (39) de bande soit coupé avec formation d'au moins une partie (43) de bord scellée, **caractérisé en ce que** :
- des unités (11) de soudage se trouvant à l'extérieur ou du côté du bord forment une bande (13) soudée s'étendant le long des bords longitudinaux de la bande (9) de nappe,
- on fait avancer la bande (9) de nappe avec les bandes (13, 15) soudées ainsi formées vers un découpeur (17) longitudinal, qui effectue dans les bandes (13, 15) soudées respectivement une coupe (19), qui sépare la bande (9) de nappe en des bandes (21) partielles ayant des bords (23) longitudinaux scellés,
- on fait arriver les bandes (21) partielles à une machine (25) de pliage et on les y plissent, et
- dans une opération de soudage et de coupe, on forme une bande (41) soudée transversale de la même façon que les bandes (13, 15) soudées et on effectue une coupe (37) de séparation, s'étendant perpendiculairement au sens d'avance, qui est formée au milieu dans la bande (41) soudée transversale et qui sépare les bandes (21) partielles en des tronçons (29) de bandes séparés, qui ont des branches (43) de soudure scellées non seulement sur les bords (23) longitudinaux, mais également sur les bords transversaux.

2. Procédé suivant la revendication 1, **caractérisé en ce qu'**une unité (11) de soudage mise au milieu de la bande (9) de nappe produit une bande (15) soudée de même type.

3. Procédé suivant la revendication 1 ou 2, **caractérisé en ce que** l'on forme les soudures, en utilisant un additif de soudure, par exemple une feuille (63) en matière plastique, inséré entre les parties de bord scellées.

4. Procédé suivant la revendication 3, **caractérisé en ce qu'**on utilise un additif de soudure formant une colle fusible, par exemple une feuille (63) en PBT.

5. Procédé suivant l'une des revendications précédentes, **caractérisé en ce que** l'on effectue l'opération de soudure par soudage (51) par laser et **en ce qu'**on utilise une substance (63) supplémentaire de soudure formant une couche d'arrêt de la lumière laser.
